(19) Europäisches Patentamt
European Patent Office
Office européen des brevets

(11) Publication number: **0 242 487 A1**

(12) **EUROPEAN PATENT APPLICATION**

(21) Application number: **86400852.9**

(51) Int. Cl.[4]: **B60C 11/06**

(22) Date of filing: **21.04.86**

(43) Date of publication of application:
**28.10.87 Bulletin 87/44**

(84) Designated Contracting States:
**DE FR GB**

(71) Applicant: **SUMITOMO RUBBER INDUSTRIES LIMITED**
**No. 1-1, Tsutsui-cho 1-chome**
**Chuo-ku Kobe-shi Hyogo-ken(JP)**

(72) Inventor: **Kasube, Haruo**
**45-64 Tendo Shigo-cho**
**Toyota-shi Aichi-ken(JP)**
Inventor: **Ochiai, Kiyoshi**
**4-1-908, Manabigaoka 3-chome Tarumi-ku**
**Kobe-shi Hyogo-ken(JP)**
Inventor: **Fukumoto, Tetuhiro**
**165 Aza Hebiishi**
**Shirakawa-shi Fukushima-ken(JP)**
Inventor: **Takeuchi, Akihiro**
**6-17, Ryugadai Suma-ku**
**Kobe-shi Hyogo-ken(JP)**

(74) Representative: **Descourtieux, Philippe et al**
**CABINET BEAU de LOMENIE 55 rue d'Amsterdam**
**F-75008 Paris(FR)**

(54) **Pneumatic tire for heavy vehicles.**

(57) The invention relates to a pneumatic tire having a tread provided on its outer surface with at least one circumferential grooves is disclosed.

On the opposite groove walls of the said groove multiple projecting blocks (5) are provided at a space (ℓ2) between adjoining projecting blocks (5) in the circumferential direction corresponding to 10-50 % of the circumferential length (ℓ1) of the projecting block (5) and between the projecting blocks (5) a narrower groove (4) is formed circumferentially having the open groove width (W1) corresponding to 5-50% of the open groove width (W) of the above mentioned wider circumferential groove.

An application is the manufacturing of a heavy duty pneumatic tire.

FIG. 2

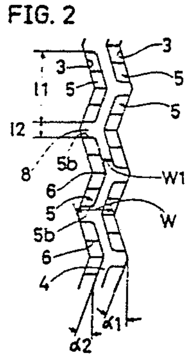


EP 0 242 487 A1

Xerox Copy Centre

# PNEUMATIC TIRE FOR HEAVY VEHICLES

## BACKGROUND OF THE INVENTION

### Field of the Invention.

This invention relates to heavy duty penumatic tire for use in heavy vehicles such as trucks and buses, having tread patterns incorporating anti-skid grooves of a shape to minimize stone pick-up and stone retention without reducing wet-grip performance of tires.

### Description of the Prior Art.

Pneumatic tires are conventionally provided with a tread surface having an anti-skid pattern defined by circumferential grooves or, and transverse grooves which are molded in the surface of the tread during manufacture.

In general, a pneumatic tire has a tread patterns of the lug, rib, rib-lug, block, lug-block or rib-block pattern type which is selected in accordance with performance required for the tire depending on the use of the tire, seasonal factors, road conditions, etc. especially a pattern of tread grooves for heavy duty tires for use in heavy vehicles such as trucks and buses are mainly used with a tread pattern of the rib, rib-lug, or rib-block type pattern with respect to the strong requirement for wet grip performance and long wear life tread performance.

However, such a tread pattern having circumferentially extending longitudinal grooves has the following drawbacks when compared with the other tread patterns such as a lug-type pattern.

That is, stone pick-up is apt to occur in the circumferential groove. If this occurs and the tires is driven, it is difficult to discharge stones from the grooves due to the strong restraining force of the groove. As a result, the stones strike the base rubber between the bottom of the circumferential grooves and the reinforcement for the tread portion of the belt for every rotation of the tire and tend to cause the breakage of the base rubber and hense damage the belt layers or carcass plies inside the tread rubber. Particularly, when the belt is comprised of metal cords, rust is induced by penetrating water from the damaged portion of the base rubber into the belt or the carcass plies and as a result, separation failure of metal cords from the rubber is caused. Finally there is the fatal possibility of damaging the durable life of the tire.

As a countermeasure against such stone pick-up, it has hitherto been proposed to arrange a groove with a step (L⌋ -shaped groove) continuously extending toward the circumferential direction of the tire on the groove walls of the longitudinal groove and to arrange a protruded stripe continuously extending toward the circumferential direction of the tire on the groove bottom. In the former case, the stone pick-up is somewhat protected in the early stage of the tire use by the wider groove and the narrower groove. However when the wider grooves disappeared due to tread wear, only the narrower groove remains, and as a result, there is a problem to reduce the wet grip performance in the worn tire saving only the narrower groove. In the latter case, the base rubber on the groove bottom is somewhat protected, but it can not practically and satisfactorily be expected to facilitate the discharge of picked up stones.

### Brief summary of the invention

It is, therefore, an object of this invention to advantageously solve the aforesaid problem without reducing the wet grip performance in pneumatic tire for heavy vehicles having a rib-type tread pattern irrespective of having carcass of bias or radial construction.

### Brief description of the drawings

Figure 1 is a developed plan view of an embodiment of the tread portion in the tire according to this invention.

Figure 2 is an enlarged view of a circumferential groove embodying this invention;

Figures 3, 4 and 5 are selectional views taken along the line A-A of figure 2 ; and

Figure 6 shows the results of the tests conducted to compare the conventional rib pattern and the pattern embodying this invention in respect of the relation between the number of picked up stones and the travelling distance.

Detailed description

In a heavy duty pneumatic tire having a tread provided on its outer surface with at least one circumferential groove, the blocks thereof are intermittently arranged on both groove walls of the aforementioned circumferential groove from the groove bottom and the surface of the projecting blocks is under the outer surface of the tire, and between the projecting blocks on the opposite groove wall to each other, the circumferential narrower groove is to be arranged to divide both opposite projecting blocks in the axial direction.

The present invention will be explained in more detail referring to the accompanying drawings.

Figure 1 is a developed plan view of an embodiment of the tread portion in the tire according to this invention.

Referring to Figure 1, a heavy duty pneumatic tire (1) has at least one circumferentially extending longiudinal grooves (2), and number of the projecting blocks (5) to be defined by the narrower groove (4) are intermittently arranged extending toward the circumferential direction of the tire on the groove walls (3) of the circumferential longitudinal grooves (2). In a preferred embodiment of the pneumatic tire of the present invention a longitudinal groove with a narrower longitudinal groove has a zig-zag groove form and projecting blocks (5) have cuts (6) spaced at a preferable pitch.

On the groove wall (3) of the circumferential groove (2) are disposed plural projecting block (5) each extending from on the groove base (7) of the longitudinal groove (2) and being defined by a split part (8) arranged at the corners of respective groove wall (3), and the interval ($\ell 2$) of between the adjoining projecting blocks (5-5) is approximately 10 to 50 % of the circumferential length $\ell 1$ of each projecting block. The upper surface (5a) of the projecting block (5) is at a distance (H1) the tread surface (G) and having a step (9), where height (H1) is arranged to be 0.2 to 0.8 time of the height (H) of longitudinal groove (2).

The upper surface (5a) of block (5) is generally parallel to the tread surface (G) when it leans forward the axial direction or the circumferential direction of the tire can be used as another embodiment of the present invention, for example, as shown in Figure 4, its upper surface (5a) leans to be higher toward the narrow groove (4) than at the groove wall (3) or as shown in Figure 5 its upper surface (5a) leans to be lower toward the narrow groove (4) than at the groove wall (3).

The groove width (W1) of the aforesaid narrower groove (4) which defines the projecting blocks in the axial direction is preferably to be 5 to 50 % of the groove width (W) of the longitudinal groove (2) to drainage performance. The lowering of wet grip performance by wearing down of the longitudinal wider groove (2) can be prevented by adopting such arrangement as the angle ($\alpha 2$) of the zig-zag form of the narrower groove (4) extending in the circumferential direction of the tire should be smaller than the angle ($\alpha 1$) of the zig-zag form of the longitudinal groove (2).

The knife cuts (6) arranged to have about 2mm width on the projecting block (5) extend toward the axial direction of the tire and its depth is the same as the depth of the narrower groove. The knife cuts (6) work to increase the drainage efficiency, when the surface (5a) of the projecting block (5) begun to contact the road surface after the longitudinal wider groove (2) disappeared due to wear down.

As aforementioned, when the tread rubber wear down to the extent where the wider groove of the longitudinal groove (2) disappears, the narrower groove (4) appears on the tread surface and the groove width contacting with road suddenly become narrower to (W1) from (W) in the case of Figure 3.

However, after the longitudinal wider groove (2) disappears, the split parts (8) having a beforesaid spaces ($\ell 2$) which are arranged between projecting blocks (5) assume the function to work as a traverse groove to maintain the wet grip performance. Accordingly, the beforesaid space ($\ell 2$) is less than 10 % of the circumferential length ($\ell 1$) of the block (5), the wet grip performance become to insufficient, on the other hand, if ($\ell 2$) is more than 50 % of the circumferential length ($\ell 1$) of the block (5), there is a tendency toward non-uniform or the uneven wear of the edges (5b) of the block (5), after the continuous travel of the tires over a long distance for a long period of time.

According to the present invention, if obstructions scattered on a road surface such as ground stones and the like are picked up by the circumferential grooves, the block (5) prevent bitten stones from reaching to the base rubber between the bottom of the circumferential grooves and the reinforcement or the belt for the tread portion and causing the breakage of base rubber and damaging the reinforcement or the belt inside the base rubber and the bottom of the circumferential groove has such a step that the discharge of picked-up stones is facilited.

Furthermore the projecting blocks have a function to control the movement of the rib portion (10) at the ground contact area for every rotation of the tires and to prevent rib edges from suffering the uneven wear.

As stated hereinbefore, the invention effectively and adequately solves the harmful influence of stone pick-up at the tread groove by arranging a plurality of projecting blocks on both groove walls of longitudinal grooves of a so-called rib-type tread pattern irrespective where the carcass is of bias or radial construction without raising other serious defects particularly without lowering the wet drip performance even if the circumferential grooves having a wide open groove width due to wear.

The effectiveness of the present invention was confirmed by the following test with respect to two tires (A) and (B) having the same open groove width of the circumferential groove, wherein the tire (A) is the above illustrated tire having the tread pattern with a circumferential groove with the projecting blocks intermittently disposed on the opposed groove walls thereof as shown in Figure 1, Figure 2, Figure 3 and the tire (B) is a Prior Art tire having a U-shaped circumferential groove without the projecting blocks (5) as shown in Figure 1. The detailed specifications on test tires are shown in the following table 1.

Table 1

| | A | B |
|---|---|---|
| Wider open groove width of the longitudinal groove W (mm) | 13.0 | 13.0 |
| Angle of the zig-zag form of a longitudinal groove $\alpha 1$ (°) | 17.0 | 17.0 |
| Circumferential length of the projecting block $\ell 1$ (mm) | 25.0 | — |
| Space between the projecting brocks $\ell 2$ (mm) | 5.0 | — |
| Depth of the longitudinal groove H (mm) | 14.5 | 14.5 |
| Height of the step on the projecting blocks H1 (mm) | 5.0 | — |
| Narrower groove width between projecting block W1 (mm) | 3.0 | — |
| Angle of the zig-zag form of the narrower groove $\alpha 2$ (°) | 15.0 | — |
| Degree of damages by stone pick-up on the groove bottom | 0.2 | 2.4 |

Test conditions are as follows :

Radial tires of 10.00 R20, 14PR having steel cord layers for reinforcing belts and rims of 7.50V x 20 were tested with an inner pressure of 7.25 kg/cm$^2$ and subjected to a load of 2,700 kg on a tire and traveling speed was about 50 to 70 km/h.

The degree of damages by stone pick-up on the bottom of the circumferential groove and the number of stones picked-up in the circumferential groove of each tire were measured respectively with respect to the travelling distance.

The relation between the travelling distance and the number of picked-up stones was shown in Figure 6, from which it can be recognized that the tire (A) according to the present invention hardly produces the stone pick-up, and any degree of damages in the table 1 means the rate of suffering damages on the groove bottom by the stone picked up and the great improvement of the tire (A) is shown.

## Claims

1. Heavy duty pneumatic tire for use in heavy vehicles having a tread provided on its outer surface with at least one circumferential groove (2), characterized in that it comprises a plurality of projecting blocks (5) on the groove walls under the tread surface and spaced from each other on the opposed groove walls to form a narrower circumferential groove and at a space ($\ell 2$) between the adjoining blocks (5) in the circumferential direction of said groove.

2. Heavy duty pneumatic tire as claimed in claim 1, characterized in that said projecting blocks (5) are disposed on both opposed groove walls (3) of said groove (2) at a ratio of a circumferential length ($\ell 1$) of said projecting blocks to an interval ($\ell 2$) between adjoining projecting blocks (5) in the circumferential direction of 1 : 0,1 to 1 : 0,5.

3. Heavy duty pneumatic tire as claimed in any one of claims 1 and 2, characterized in that said circumferential wider groove (2) and said narrower groove (4) extend in a circumferential direction of the tire in the zig-zag form and the angle ($\alpha 2$) of the zig-zag of said narrower groove (4) to the circumferential direction is smaller than the angle ($\alpha 1$) of the zig-zag of said wider groove (2).

4. Heavy duty pneumatic tire as claimed in any one of claims 1 to 3, characterized in that said projecting blocks (5) is provided on its outer surface with at least one knife cut (6) in the axial direction of the tire.

5. Heavy duty pneumatic tire as claimed in any one of claims 1 to 4, characterized in that the open groove width (W1) of the narrower groove (4) is 5-50 % of the open groove width (W) of the circumferential longitudinal groove (2).

FIG. 1

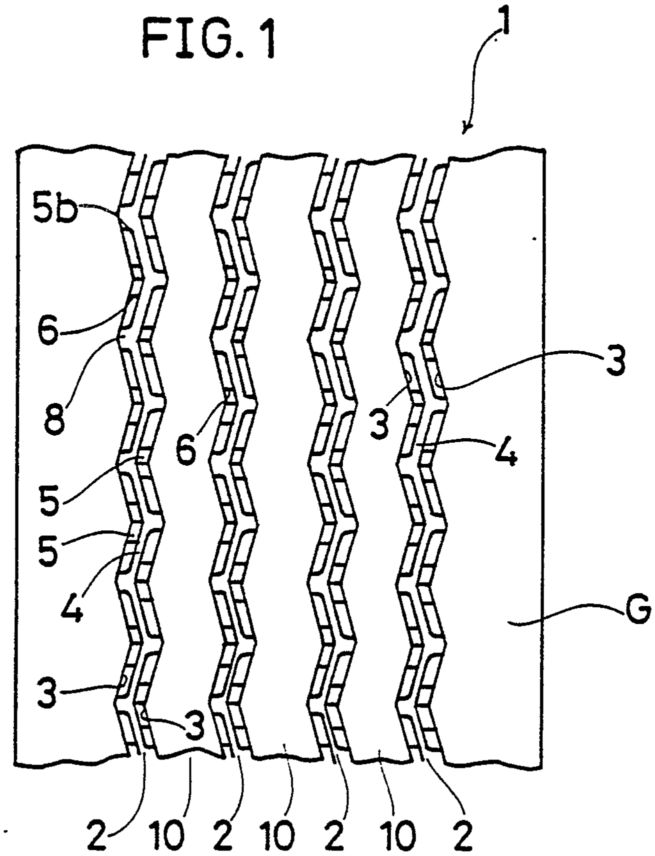
1
5b
6
8
6
3
3
4
5
5
4
G
3
3
2
10
2
10
2
10
2

FIG. 2

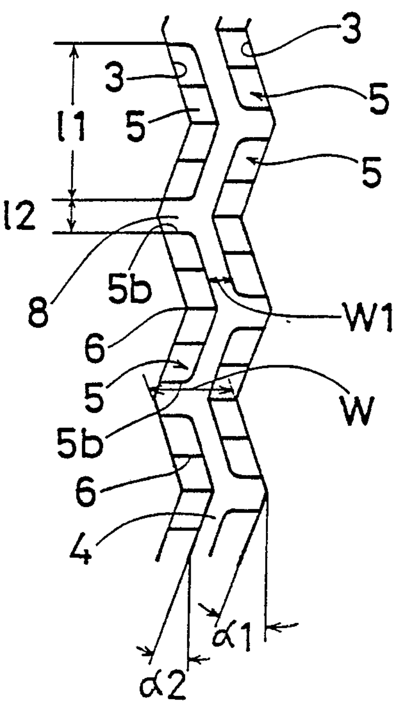
3
3
l1
5
5
5
l2
8
5b
W1
6
5
W
5b
6
4
α1
α2

FIG. 3

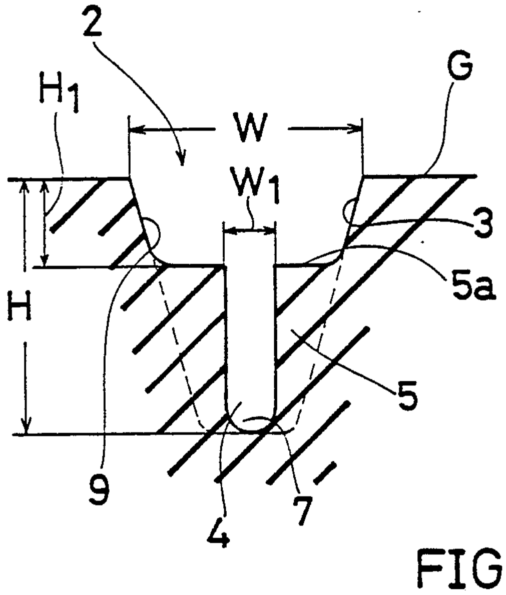


FIG. 4

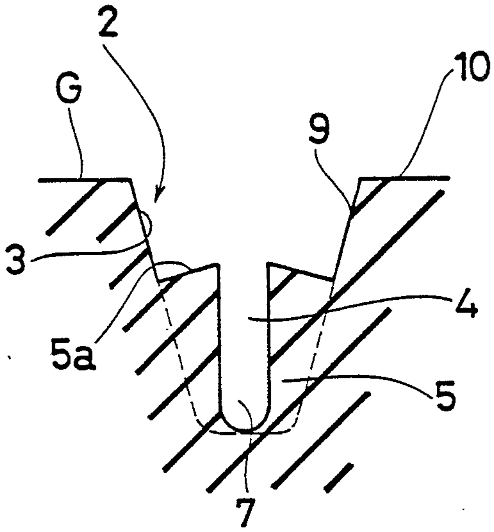


FIG. 5

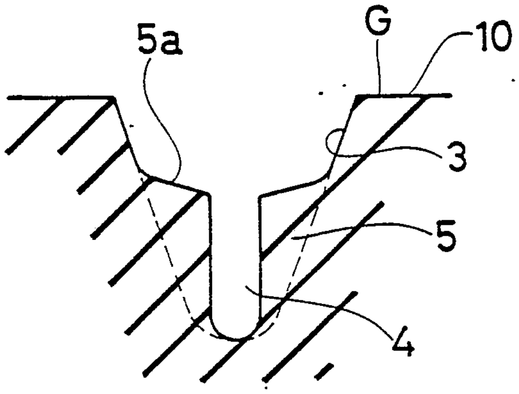


FIG. 6

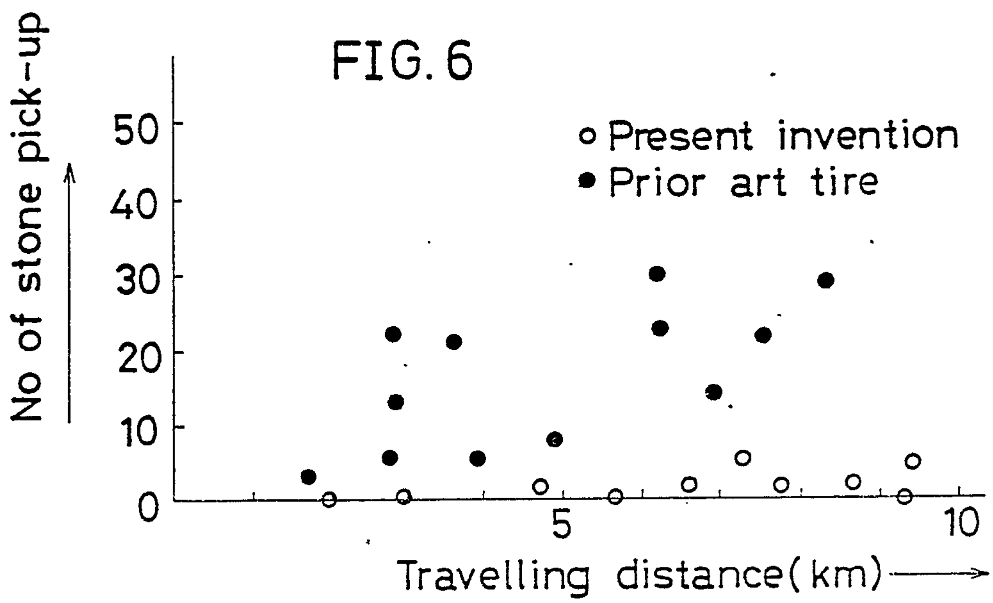

European Patent Office

# EUROPEAN SEARCH REPORT

Application number

EP 86 40 0852

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | PATENTS ABSTRACTS OF JAPAN, vol. 9, no. 238 (M-416)[1961], 25th September 1985; & JP-A-60 92 904 (SUMITOMO GOMU KOGYO K.K.) 24-05-1985 --- | 1-3,5 | B 60 C 11/06 |
| A | EP-A-0 069 464 (DUNLOP) * Page 6, line 32 - page 7, line 9 * --- | 1,3 | |
| A | US-A-3 951 193 (R. YEAGER) * Column 1, line 60 - column 2, line 21 * --- | 4 | |
| A | DE-A-1 505 020 (FIRESTONE) --- | | TECHNICAL FIELDS SEARCHED (Int Cl 4) |
| A | FR-A-2 444 576 (PIRELLI) --- | | B 60 C 11/06 |
| A | US-A-3 115 919 (E. ROBERTS) ----- | | |

The present search report has been drawn up for all claims

| Place of search | Date of completion of the search | Examiner |
|---|---|---|
| THE HAGUE | 18-12-1986 | SCHMITT L.P. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82